Europäisches Patentamt

European Patent Office

Office européen des brevets

(11) Veröffentlichungsnummer: **0 297 270 B1**

# EUROPÄISCHE PATENTSCHRIFT

(45) Veröffentlichungstag der Patentschrift:
06.03.91 Patentblatt 91/10

(51) Int. Cl.$^5$: **C09D 179/08**, // C08L79/08,
B05D7/14

(21) Anmeldenummer: 88108106.1

(22) Anmeldetag: 20.05.88

(54) **Verwendung von Beschichtungsmitteln auf Polyesterimidharzbasis zum Beschichten von Metallbändern.**

Verbunden mit 88904953.2/0363408
(europäische
Anmeldenummer/Veröffentlichungsnummer)
durch Entscheidung vom 18.07.90.

(30) Priorität: 25.05.87 DE 3717596

(43) Veröffentlichungstag der Anmeldung:
04.01.89 Patentblatt 89/01

(45) Bekanntmachung des Hinweises auf die
Patenterteilung:
06.03.91 Patentblatt 91/10

(84) Benannte Vertragsstaaten:
AT BE CH DE ES FR GB IT LI NL SE

(56) Entgegenhaltungen:
FR-A- 2 311 831
US-A- 4 329 397

(73) Patentinhaber: BASF Lacke + Farben
Aktiengesellschaft
Max-Winkelmann-Strasse 80
W-4400 Münster (DE)

(72) Erfinder: Lienert, Klaus-Wilhelm, Dr.
Bernadottestrasse 92
W-2000 Hamburg 50 (DE)
Erfinder: Schmitz, Arno, Dr.
Lerchenhain 9
W-4405 Nottuln (DE)
Erfinder: Kunze, Peter Eduard
Vom Stein Strasse 5
W-4406 Drensteinfurt (DE)

(74) Vertreter: Leifert, Elmar, Dr.
BASF Lacke + Farben AG Patentabteilung
Max-Winkelmann-Strasse 80 Postfach 61 23
W-4400 Münster (DE)

**Beschreibung**

Die Erfindung betrifft Verfahren zum Beschichten von Metallbändern im Bandlackierverfahren unter Verwendung von Beschichtungsmitteln auf Polyesterharzbasis.

Geeignete Bindemittel für das Bandlackierverfahren (Coil-Coating-Verfahren) sind beispielsweise hydroxylgruppenhaltige Polyesterharze, die mit Aminoplastharzen ausgehärtet werden können.

Hochhitzebeständige Systeme, wie z.B. Silikonharze, Polyesterimidharze, Polyimidharze, Polyamidimidharze, Polyhydantoine, Polybismaleinimide, Polyethersulfone und andere sind bekannt. Diese Bindemittel finden je nach chemischer Zusammensetzung Anwendung als Beschichtungsmittel für elektronische Bestandteile, Spulen, elektrische Leiter, thermisch besonders belastete Bauteile, wie Ablüfter, Rohre, Installationen in Fernheizungsanlagen etc. Die Beschichtung mit diesen Beschichtungsmitteln erfolgt durch verschiedene Techniken, wie z.B. Spritzen, Spritzgießen, Tauchen, Streichen usw. Die Nachteile dieser Applikationstechniken bestehen in einer hohen Lösemittelemission und/oder in notwendigen langen Einbrennzeiten.

Aus der EP-A-176 251 sind hochhitzebeständige Anstrichstoffe auf Basis von Silikonharzen bekannt. Diese Anstrichstoffe sind jedoch wenig geeignet zur Auspufflackierung von PKW's. Bei der Auspufflackierung kommt es nicht nur auf die Hochhitzebeständigkeit an, sondern auch auf Schock- und Wasserbeständigkeiten sowie Beständigkeiten gegenüber Salz und den korrosiven Auspuffgasen. Außerdem ist die Beschichtung von Auspuffen mittels der konventionellen Techniken unter Verwendung von Silikonharzen aufwendig, und die Einbrennzeiten sind lang.

Die der Erfindung zugrundeliegende Aufgabe besteht darin, ein Verfahren zum Beschichten von Metallbändern im Bandlackierverfahren zu entwickeln, das insbesondere geeignet ist zur Beschichtung von stark temperaturbelasteten Teilen, wie Auspuffen, Auspufftöpfen usw. Die erhaltenen Überzüge sollen daher eine gute Temperaturbeständigkeit, eine gute Schock- und Wasserbeständigkeit sowie eine gute Beständigkeit gegenüber Salz, Benzin, Öl und den korrosiven Auspuffgasen aufweisen. Bedingungen sind insbesondere eine gute Dauertemperaturbeständigkeit und ein hervorragender Korrosionsschutz. Außerdem sollen die erhaltenen Überzüge eine gute Substrat- und Zwischenhaftung sowie gute mechanische Verformungseigenschaften aufweisen, und die erforderlichen Einbrennzeiten sollten möglichst kurz sein.

Die der Erfindung zugrundeliegende Aufgabe wird gelöst durch Verfahren der eingangs genannten Art, die dadurch gekennzeichnet sind, daß die Beschichtungsmittel bestehen aus

a) 3 bis 50 Gew.-%, vorzugsweise 20 bis 40 Gew.-%, Polyesterimidharzen aus mehrwertigen Carbonsäuren bzw. deren Derivaten, mehrwertigen Alkoholen, ggf. aus Oxycarbonsäuren oder deren Derivaten, sowie aus imidgruppenhaltigen Ausgangsstoffen, die aus solchen Verbindungen bestehen, die zwischen den funktionellen Gruppen als Bindeglieder einen oder mehrere fünfgliedrige, aus der Umsetzung von Pyromellithsäuredianhydrid, Trimellithsäureanhydrid, Naphthalintetracarbonsäuredianhydriden oder Dianhydriden von Tetracarbonsäuren mit zwei Benzolkernen pro Molekül, bei denen die Carboxylgruppen in 3, 3', 4, 4'-Stellung stehen mit mehrfunktionellen primären Aminen, stammende Imidringe enthalten, wobei 20 bis 60 Gew.-%ige Lösungen der Polyesterimide bei 23°C Viskositäten im Bereich von 90 bis 4.000 mPas aufweisen und die Hydroxylzahlen der Polyesterimide im Bereich von 50 bis 300 mg KOH/g liegen,

b) 3 bis 40 Gew.-%, vorzugsweise 10 bis 30 Gew.-%, Pigmenten und/oder Füllstoffen,

c) bis zu 3 Gew.-% geeigneten Hilfsstoffen und Additiven und

d) 10 bis 90 Gew.-%, vorzugsweise 20 bis 60 Gew.-%, eines oder mehrerer organischer Lösemittel, wobei die Summe von a), b), c) und d) 100 Gew.-% beträgt und die Aushärtung der Metallbänder unter Verwendung von geeigneten Katalysatoren bei Objekttemperaturen von 200 bis 350°C während einer Zeit von 30 bis 120 Sekunden erfolgt.

Die als Komponente a) verwendeten Polyesterimidharze sind bekannt und sind beispielsweise beschrieben in DE-OS 14 45 263 und DE-OS 14 95 100. Die Herstellung der Polyesterimide erfolgt in bekannter Weise durch Veresterung der mehrwertigen Carbonsäuren mit den mehrwertigen Alkoholen, ggf. unter Zusatz von Oxycarbonsäuren, und unter Verwendung von imidgruppenhaltigen Ausgangsstoffen. Anstelle der freien Säuren und/oder Alkohole können auch deren reaktionsfähige Derivate eingesetzt werden. Als Carbonsäurekomponente wird vorzugsweise Terephthalsäure eingesetzt, und als mehrwertige Alkohole werden bevorzugt Ethylenglykol, Glycerin und Tris-2-hydroxyethylisocyanurat, wobei letzteres besonders bevorzugt ist, eingesetzt. Die Verwendung von Tris-2-hydroxyethylisocyanurat führt zu einer Erhöhung der Erweichungstemperatur des erhaltenen Lackfilmes.

Die imidgruppenhaltigen Ausgangsstoffe können beispielsweise durch Reaktion zwischen Verbindungen erhalten werden, von denen die eine eine fünfgliedrige, cyclische Carbonsäureanhydridgruppierung sowie mindestens noch eine weitere funktionelle Gruppe besitzen muß, während die andere außer einer

2

primären Aminogruppe noch mindestens eine weitere funktionelle Gruppe enthält. Diese weiteren funktionellen Gruppen sind vor allem Carboxylgruppen oder Hydroxylgruppen, es können jedoch auch weitere primäre Aminogruppen oder Carbonsäureanhydridgruppen sein.

Beispiele für Verbindungen mit einer cyclischen Carbonsäureanhydridgruppierung mit einer weiteren funktionellen Gruppe sind vor allem Pyromellithsäureanhydrid und Trimellithsäureanhydrid. Es kommen jedoch auch andere aromatische Carbonsäureanhydride in Frage, beispielsweise die Naphthalintetracarbonsäuredianhydride oder Dianhydride von Tetracarbonsäuren mit zwei Benzolkernen im Molekül, bei denen die Carboxylgruppen in 3, 3', 4- und 4'-Stellung stehen.

Beispiele für Verbindungen mit einer primären Aminogruppe sowie einer weiteren funktionellen Gruppe sind insbesondere diprimäre Diamine, z.B. Ethylendiamin, Tetramethylendiamin, Hexamethylendiamin, Nonamethylendiamin und andere aliphatische diprimäre Diamine. Ferner kommen in betracht aromatische diprimäre Diamine, wie Benzidin, Diaminodiphenylmethan, Diaminodiphenylketon-, -sulfon, -sulfoxyd, -ether und -thioether, Phenylendiamine, Toluylendiamine, Xylylendiamine sowie auch Diamine mit drei Benzolkernen im Molekül, wie Bis(4-aminophenyl)-α,α'-p-Xylol oder Bis(-4-aminophenoxy)-1, 4-benzol, und schließlich cycloaliphatische Diamine, wie das 4, 4'-Dicyclohexylmethandiamin. Als aminogruppenhaltige Verbindungen mit einer weiteren funktionellen Gruppe sind ferner auch Aminoalkohole verwendbar, z.B. Monoethanolamin oder Monopropanolamine, weiterhin Aminocarbonsäuren, wie Glycin, Aminopropionsäuren, Aminocapronsäuren oder Aminobenzoesäuren.

Zur Herstellung der Polyesterimidharze werden bekannte Umesterungskatalysatoren verwendet, beispielsweise Schwermetallsalze, wie Bleiacetat, Zinkacetat, weiterhin Butyltitanate, Cerverbindungen sowie organische Säuren, wie z.B. para-Toluolsulfonsäure. Als Vernetzungskatalysatoren bei der Aushärtung der Polyesterimide können die gleichen Umesterungskatalysatoren - zweckmäßigerweise in einem Anteil bis zu 3 Gew.-%, bezogen auf das Bindemittel, - verwendet werden.

Geeignete Pigmente und/oder Füllstoffe (Komponente b) sind Strontiumchromat, Zinkchromat, Bleichromat, Zinkpulver, Zinkphosphat, metallische Pigmente, wie z.B. Aluminium, Titan, Stahl und dergleichen.

Beispiele für geeignete Hilfsstoffe und Additive sind Siliconöle, Wachse, Silikate und pyrogene Kieselsäuren.

Als organische Lösemittel kommen lineare und/oder cyclische aliphatische und/oder aromatische Kohlenwasserstoffe, Ether, Ester, Alkohole, Amide, Phenole und Kresole zum Einsatz. Bevorzugt sind aromatische Kohlenwasserstoffe, N-Methylpyrrolidon, N, N-Dimethylformamid, N, N-Dimethylacetamid, Kresole und Glykolether.

Die Herstellung der Beschichtungsmittel erfolgt durch Mischen der einzelnen Komponenten, wobei zuerst die Bindemittel im Lösemittel oder im Lösemittelgemisch gelöst werden. Sofern den Beschichtungsmitteln noch andere, unlösliche Bestandteile, wie Pigmente, Füllstoffe, Additive und dergleichen zugesetzt werden, können diese entweder der Lösung zugegeben werden oder, soweit erforderlich, mit den in der Lackindustrie üblichen Dispergieraggregaten dispergiert werden.

Das erfindungsgemäße Verfahren umfaßt eine ein- oder zweischichtige Verarbeitung, d.h. es kann entweder nur eine Schicht aufgebracht werden oder die Beschichtung setzt sich aus einer Grundierung und einem Decklack zusammen, die beide nach dem Coil-Coating-Verfahren appliziert werden. Gegenstand der Erfindung ist insbesondere ein Verfahren, bei dem zunächst eine Grundierung aus dem Beschichtungsmittel aus den Komponenten a) bis d) mit einer Trockenfilmstärke von 4 bis 15 µm, vorzugsweise von 5 bis 10 µm, appliziert wird und nach dem Aushärten der Grundierung ein Decklack aus dem Beschichtungsmittel aus den Komponenten a) bis d) mit einer Trockenfilmstärke von 5 bis 23 µm, vorzugsweise 10 bis 19 µm, appliziert wird. Bei diesem mehrschichtigen Verfahren enthält das als Grundierung verwendete Beschichtungsmittel vorzugsweise Korrosionsschutzpigmente, wie z.B. Strontiumchromat, Zinkchromat, Bleichromat, Zinkpulver und Zinkphosphat. Das als Decklack verwendete Beschichtungsmittel enthält bevorzugt metallische Pigmente, wie z.B. Aluminium, Titan und Stahl.

Die nach den erfindungsgemäßen Verfahren hergestellten beschichteten Metallbänder werden bevorzugt verwendet zur Herstellung von thermisch belasteten Teilen, wie Auspuffteilen, Abluftrohren, Ofen- und Heizkörperverkleidungen und Grillgeräten.

Die erhaltenen Beschichtungen unterscheiden sich von den üblichen Auspuffbeschichtungen dadurch, daß sie eine kurze Einbrennzeit aufweisen, gute mechanische Verformungseigenschaften besitzen, wasser-, salz-, benzin-, öl- und bremsflüssigkeitsbeständig sind, schockfest sowie beständig gegen Auspuffverbrennungsprodukte sind, einen guten Korrosionsschutz aufweisen und keine Substrat- und/oder Zwischenhaftungsprobleme aufweisen. Außerdem tritt der Vorteil auf, daß die verwendeten Beschichtungsmittel eine hervorragende Lagerstabilität haben.

Im folgenden wird die Erfindung anhand von Ausführungsbeispielen näher erläutert. In diesen Beispielen beziehen sich alle Prozentangaben auf Gewichts-Prozente, alle Anteile auf Gewichtsteile.

3

EP 0 297 270 B1

|  | Polyesterimid 1 | Polyesterimid 2 | Polyesterimid 3 |
|---|---|---|---|
| Ethylenglykol | 14,6 | 36,9 | 28,1 |
| Glycerin | – | 5,1 | – |
| Trishydroxiethyl-2-isocyanurat | 23,9 | – | – |
| Dimethyltereph-thalat | 20,5 | 17,4 | 9,1 |
| 4,4'-Diaminodi-phenylmethan | 13,9 | 13,7 | 14,6 |
| Trimellithsäure-anhydrid | 27,1 | 26,9 | 48,2 |
| Lösemittel | Methyldiglykol-Solvesso (4:1) | Kresol-Solvesso (2:1) | Kresol-Solvesso (2:1) |
| Festkörper (%) | 48 | 38 | 35 |
| Viskosität (mPas) | 360–400 | 470–530 | 450–550 |
| OH-Zahl (mg KOH/g) | 75-100 | 140-160 | 165-200 |

Beispiel 1 : Grundierung 1

Aus 67, 1 g einer 45%igen Lösung des Polyesterimids 1, 29, 7 g Zinkpulver, 0, 12 g eines Aluminiumsilikats, 0, 2 g eines Teflonpulvers, 1, 9 g Tetralin und 0, 3 g eines silikonhaltigen Verlaufmittels wird durch Dissolvern eine Grundierung hergestellt. Der Festkörper beträgt 61%. Die DIN 4-Auslaufzeit beträgt 91 s.

Beispiel 2 : Grundierung 2

71, 4 g Polyesterimid 2 (38%ige Lösung), 32, 3 g Zinkpulver, 0, 4 g eines Aluminiumsilikates, 0, 2 g eines Teflonpulvers und 2, 0 g eines silikonhaltigen Verlaufmittels werden zu einer Grundierung dispergiert. Die DIN 4-Auslaufzeit beträgt 110 s bei einem Festkörper von 56, 5%.

Beispiel 3 : Grundierung 3

Aus 70, 2 g einer 35%igen Lösung des Polyesterimids 3, 27, 3 g Zinkpulver, 0, 3 g eines Aluminiumsilikats, 0, 2 g eines Teflonpulvers, 1, 8 g Tetralin und 0, 2 g eines Entlüftungsmittels wird durch Dispergieren eine Grundierung hergestellt. Der Lack hat einen Festkörper von 52% bei einer Auslaufzeit von 108 s (DIN 4).

Beispiel 4 : Decklack 1

14, 3 g Aluminiumpulver oder -flakes und 14, 3 g Solvesso 150 (Esso) werden angeteigt und mit 71, 4 g der Polyesterimid 1-Lösung (45%) versetzt. Der entstandene Lack hat einen Festkörper von 46% und eine Auslaufzeit (DIN 4) von 97 s.

Beispiel 5 : Decklack 2

12, 1 g Aluminiumpulver oder -flakes, 9, 1 g N-Methylpyrrolidon und 6, 4 g Benzylalkohol werden angeteigt. Dazu werden 70, 7 g Polyesterimid 2 als 39%ige Lösung und 1, 6 g eines Poly-n-butylacrylats als Verlaufmittel als 10%ige Lösung in Solvesso 150 (Esso) zugegeben. Der fertige Lack hat einen Festkörper von 40% bei einer Auslaufzeit von 84 s (DIN 4).

Beispiel 6 : Decklack 3

Aus 7, 5 g Aluminiumpulver oder -flakes, 17, 2 g Propylencarbonat und 54, 3 g Polyestermirid 3 (35%ige

4

Lösung) wird ein Decklack formuliert, der einen Festkörper 33, 5% und eine Auslaufzeit von 72 s hat (DIN 4).

Den Grundierungen 1 bis 3 und den Decklacken 1 bis 3 werden 0, 8 Gew.-%, bezogen auf den Bindemittelfestkörper, eines Umesterungskatalysators zugegeben.

Die Prüfung der nach dem Coil-Coating-Verfahren erhaltenen Beschichtungen erfolgt nach den entsprechenden ECCA-Verfahren. Die Ergebnisse sind im folgenden aufgeführt :

| Substrat | Allodine 1200 | | | Allodine 1200 | |
|---|---|---|---|---|---|
| Grundierung | - | - | - | 1 | 2 |
| Einbrennzeit (s) | 120 | 120 | 120 | 120 | 120 |
| Objekttemperatur ($^{\circ}$C) | 289 | 289 | 289 | 289 | 289 |
| Schichtstärke ($\mu$m) (trocken) | - | - | - | 10 | 9 |
| Decklack * | 1 | 2 | 3 | 1 | 1 |
| Gesamtschicktstärke ($\mu$m) (trocken) | ˙17 | 14 | 16 | 28 | 27 |
| Bleistifthärte | H | H | F | H | H |
| Buchholzhärte | 141 | - | - | 152 | 160 |
| MEK-Doppelhübe | >100 | >100 | >100 | >100 | >100 |
| T-Bend/ *Tape-Test* | 2.0/0 | 2.0/0 | 1,5/0 | 1,5/0 | 2,0/0 |
| Alterung (180$^{\circ}$C, 30') | 2,0/0 | 2,0/0 | 1,5/0 | 1,5/0 | 2,0/0 |
| Oberfläche | gut | gut | gut | gut | gut |
| Münztest | | | | | |
| – Substrathaftung | sehr gut | sehr gut | sehr gut | sehr gut | sehr gut |
| – Zwischenhaftung | - | - | - | sehr gut | sehr gut |

| Substrat | Allodine 1200 | Bonder 901 | Granodine C 108 | Allodine 1200 | |
|---|---|---|---|---|---|
| Grundierung | 3 | 1 | 1 | – | – |
| Einbrennzeit (s) | 120 | 120 | 120 | 60 | 90 |
| Objekttemperatur ($^\circ$C) | 289 | 277 | 277 | 244 | 274 |
| Schichtstärke ($\mu$m) (trocken) | 10 | 9 | 9 | – | – |
| Decklack * | 1 | 1 | 1 | 1 | 1 |
| Gesamtschichtstärke ($\mu$m) (trocken) | 28 | 26 | 26 | 19 | 19 |
| Bleistifthärte | H | H | H | F | H |
| Buchholzhärte | 155 | 155 | 156 | 126 | 132 |
| MEK-Doppelhübe | > 100 | > 100 | > 100 | > 30 | > 100 |
| T-Bend/ Tape-Test | 2,0/0 | 2,0/0 | 2,5/0 | 2,0/0 | 2,0/0 |
| Alterung (180$^\circ$C, 30') | 2,0/0 | 2,0/0 | 2,5/0 | 2,0/0 | 2,0/0 |
| Oberfläche | gut | gut | gut | gut | gut |
| Münztest | | | | | |
| – Substrathaftung | sehr gut | sehr gut | sehr gut | sehr gut | sehr gut |
| – Zwischenhaftung | sehr gut | sehr gut | sehr gut | – | – |

*Einbrennzeit und Objekttemperatur wie Grundierung

Mit den mit der Grundierung 1 und dem Decklack 1 beschichteten Granodine C108-Blechen wurden folgende Tests durchgeführt :

Salzsprühtest (DIN 50021) : Nach 480 Stunden konnte keine Unterwanderung am Ritz festgestellt werden.

Schwitzwasserwechselklima mit $SO_2$-haltiger Atmosphäre (SFW 0, 2S) (DIN 50018) : Über 240 Stunden wurde nur eine leichte Vermattung beobachtet.

Schwitzwasserwechselklima (DIN 50017, 240 Stunden) : Keine Blasen und keine Risse.

Beständigkeit gegenüber FAM-Prüfkraftstoff 5 Minuten Belastung, Xylol 5 Minuten Belastung sowie Öl und Bremsflüssigkeit 48 Stunden bei RT : Keine Veränderungen.

Steinschlagtest (2 × 500 g Steinsplitt, 3 bar) : Geringe Zerstörung der Oberfläche (ca. 3-5%), vereinzelte Durchschläge.

Langzeitalterungtests (65 Stunden, 250°C) zeigten bei den mit dem Decklack 1 oder mit der Grundierung 1 und dem Decklack 1 beschichteten Allodine 1200-Blechen keine Abnahme der Haftung und sonstiger Eigenschaften. Die Haftung wurde auch nicht durch wiederholtes Erhitzen auf 250°C und Eintauchen in kaltes Wasser beeinträchtigt.

## Ansprüche

1. Verfahren zum Beschichten von Metallbändern im Bandlackierverfahren unter Verwendung von Beschichtungsmitteln auf Polyesterharzbasis, dadurch gekennzeichnet, daß die Beschichtungsmittel bestehen aus

a) 3 bis 50 Gew.-%, vorzugsweise 20 bis 40 Gew.-%, Polyesterimidharzen aus mehrwertigen Carbonsäuren bzw. deren Derivaten, mehrwertigen Alkoholen, ggf. aus Oxycarbonsäuren oder deren Derivaten, sowie aus imidgruppenhaltigen Ausgangsstoffen, die aus solchen Verbindungen bestehen, die zwischen den funktionellen Gruppen als Bindeglieder einen oder mehrere fünfgliedrige, aus der Umset-

6

zung von Pyromellithsäuredianhydrid, Trimellithsäureanhydrid, Naphthalintetracarbonsäuredianhydriden oder Dianhydriden von Tetracarbonsäuren mit zwei Benzolkernen pro Molekül, bei denen die Carboxylgruppen in 3, 3', 4, 4'-Stellung stehen, mit mehrfunktionellen primären Aminen stammende Imidringe enthalten, wobei 20 bis 60 Gew.-%ige Lösungen der Polyesterimide bei 23°C Viskositäten im Bereich von 90 bis 4.000 mPas aufweisen und die Hydroxylzahlen der Polyesterimide im Bereich von 50 bis 300 liegen,

b) 3 bis 40 Gew.-%, vorzugsweise 10 bis 30 Gew.-%, Pigmenten und/oder Füllstoffen,

c) bis zu 3 Gew.-% geeigneten Hilfsstoffen und Additiven und

d) 10 bis 90 Gew.-%, bevorzugt 20 bis 60 Gew.-%, eines oder mehrerer organischer Lösemittel, wobei die Summe von a), b), c) und d) 100 Gew.-% beträgt und die Aushärtung der Metallbänder unter Verwendung von geeigneten Katalysatoren bei Objekttemperaturen von 200 bis 350°C während einer Zeit von 30 bis 120 Sekunden erfolgt.

2. Verfahren nach Anspruch 1, dadurch gekennzeichnet, daß als Alkoholkomponente zur Herstellung des Polyesterimidharzes a) zum Teil Tris-2-hydroxyethylisocyanurat verwendet wird.

3. Verfahren nach Anspruch 1 und 2, dadurch gekennzeichnet, daß zunächst eine Grundierung aus dem Beschichtungsmittel aus den Komponenten a) bis d) mit einer Trockenfilmstärke von 4 bis 15 µm, vorzugsweise von 5 bis 10 µm, appliziert wird und nach dem Aushärten der Grundierung ein Decklack aus dem Beschichtungsmittel aus den Komponenten a) bis d) mit einer Trockenfilmstärke von 5 bis 23 µm, vorzugsweise 10 bis 19 µm, appliziert wird.

4. Verfahren nach Anspruch 3, dadurch gekennzeichnet daß das als Grundierung beschichtete Beschichtungsmittel Korrosionsschutzpigmente und das als Decklack verwendete Beschichtungsmittel Metallpigmente enthält.

5. Verwendung der nach den Anspruch 1 bis 4 hergestellten Metallbänder zur Herstellung von thermisch stark belasteten Teilen.

6. Verwendung der nach den Verfahren nach Anspruch 1 bis 4 hergestellten Metallbänder zur Herstellung von Auspuffteilen.

## Claims

1. A process for coating metal strip in the coil coating process using coating materials based on polyester resins, wherein which the coating materials based on polyester resins, wherein which the coating materials consist of

a) 3 to 50% by weight, preferably 20 to 40% by weight, of polyester imide resins obtained from polybasic carboxylic acids or their derivatives, from polyhydric alcohols, optionally from hydroxycarboxylic acids or their derivatives, and from imide group-containing starting materials which consist of such compounds which contain between the functional groups as conneeting links one or more five-membered imide rings c ived from the reaction of pyromellitic dianhydride, trimellitic anhydride, naphthalenetetracarboxylic dianhydrides or tetracarboxylic dianhydrides with two benzene nuclei per molecule in which the carboxylic groups are located in the 3, 3', 4, 4' positions, with polyfunctional primary amines, 20 to 60% by weight solutions of the polyester imides possessing viscosities in the range from 90 to 4,000 mPas at 23°C and the hydroxyl values of the polyester imides being in the range from 50 to 300,

b) 3 to 40% by weight, preferably 10 to 30% by weight, of pigments and/or fillers,

c) up to 3% by weight of suitable auxiliary substances and additives and

d) 10 to 90% by weight, preferably 20 to 60% by weight, of one or more organic solvents, the sum of a), b), c) and d) being 100% by weight and the curing of the metal strip taking place at object temperatures from 200 to 350°C for 30 to 120 seconds in the presence of suitable catalysts.

2. The process as claimed in claim 1, wherein in part tris-2-hydroxyethyl isocyanurate is used as the alcohol component for the preparation of the polyester imide resin a).

3. The process as claimed in claims 1 and 2, wherein a primer consisting of the coating material produced from the components a) to d) with a dry film thickness from 4 to 15 µm, preferably from 5 to 10 µm, is first applied and, after the primer has been cured, a topcoat consisting of the coating material produced from the components a) to d) with a dry film thickness from 5 to 23 µm, preferably 10 to 19 µm, is applied.

4. The process as claimed in claim 3, wherein the coating material used as the primer contains anticorrosive pigments and the coating material used as the topcoat contains metallic pigments.

5. The use of the metal strip produced by the processes as claimed in claims 1 to 4 for the production of components exposed to high temperatures

6. The use of the metal strip produced by the processes as claimed in claims 1 to 4 for the production

EP 0 297 270 B1

of exhaust components.

**Revendications**

1. Procédé de revêtement de bandes métalliques dans le procédé de couchage sur bande, avec utilisation d'agents de revêtement à base de résine de polyester, caractérisé par le fait que les agents de revêtement se composent de :

(a) 3 à 50% en poids, de préférence, 20 à 40% en poids, de résines de polyesterimide à partir d'acides carboxyliques polyvalents ou de leurs dérivés, d'alcools polyvalents, le cas échéant à partir d'acides oxycarboxyliques ou de leurs dérivés, de même qu'à partir de substances de départ à teneur en groupes imide, qui se composent de composés qui contiennent, entre les groupes fonctionnels, en tant que liaisons, un ou plusieurs cycles imide à cinq chaînons, issus de la réaction de dianhydride d'acide pyromellitique, d'anhydride d'acide trimellitique, de dianhydrides d'acides naphtalènetétracarboxyliques ou de dianhydrides d'acides tétracarboxyliques ayant deux noyaux benzéniques par molécule, pour lesquels les groupes carboxyle se trouvent en position 3, 3', 4, 4', avec des amines primaires polyfonctionnelles, des solutions à 20 à 60% en poids des polyesterimides présentant, à 23°C, des viscosités dans la plage de 90 à 4000 mPas, et les indices d'hydroxyle des polyesterimides se situant dans la plage de 50 à 300,

(b) 3 à 40% en poids, de préférence, 10 à 30% en poids, de pigments et/ou de charges,

(c) jusqu'à 3% en poids d'adjuvants et additifs appropriés, et

(d) 10 à 90% en poids, de préférence, 20 à 60% en poids, d'un ou plusieurs solvants organiques, la somme de (a), (b), (c) et (d) s'élevant à 100% en poids, et le durcissement des bandes métalliques ayant lieu avec utilisation de catalyseurs appropriés à des températures d'objet de 200 à 350°C, pendant un laps de temps de 30 à 120 secondes.

2. Procédé selon la revendication 1, caractérisé par le fait qu'on utilise, comme composant alcool pour la préparation de la résine de polyesterimide (a) en partie de l'isocyanurate de tris-hydroxy-2 éthyle.

3. Procédé selon l'une des revendications 1 et 2, caractérisé par le fait que l'on applique tout d'abord une couche de fond à base de l'agent de revêtement obtenu à partir des composants (a) à (d) avec une épaisseur de film sec de 4 à 15 µm, de préférence, de 5 à 10 µm, et qu'après le durcissement de la couche de fond, on applique une laque de recouvrement à base de l'agent de revêtement obtenu à partir des composants (a) à (d) avec une épaisseur de film sec de 5 à 23 µm, de préférence de 10 à 19 m.

4. Procédé selon la revendication 3, caractérisé par le fait que l'agent de revêtement appliqué comme couche de fond contient des pigments de protection vis-à-vis de la corrosion, et l'agent de revêtement utilisé comme laque de recouvrement, des pigments métalliques.

5. Utilisation des bandes métalliques fabriquées par le procédé tel que défini à l'une des revendications 1 à 4, pour la fabrication de pièces fortement chargées thermiquement.

6. Utilisation des bandes métalliques fabriquées par le procédé tel que défini à l'une des revendications 1 à 4 pour la fabrication de pièces d'échappement.